(19) Europäisches Patentamt
European Patent Office
Office européen des brevets

(11) EP 1 516 002 B1

(12) **FASCICULE DE BREVET EUROPEEN**

(45) Date de publication et mention de la délivrance du brevet:
**09.04.2008 Bulletin 2008/15**

(21) Numéro de dépôt: **03749905.0**

(22) Date de dépôt: **25.04.2003**

(51) Int Cl.:
***C08F 293/00*** *(2006.01)* ***C08L 53/00*** *(2006.01)*
***C09J 153/00*** *(2006.01)*

(86) Numéro de dépôt international:
**PCT/FR2003/001316**

(87) Numéro de publication internationale:
**WO 2003/095513 (20.11.2003 Gazette 2003/47)**

(54) **COPOLYMERES SEQUENCES**
BLOCKCOPOLYMERE
BLOCK COPOLYMERS

(84) Etats contractants désignés:
**AT BE BG CH CY CZ DE DK EE ES FI FR GB GR HU IE IT LI LU MC NL PT RO SE SI SK TR**

(30) Priorité: **09.05.2002 US 142694**

(43) Date de publication de la demande:
**23.03.2005 Bulletin 2005/12**

(73) Titulaire: **RHODIA CHIMIE**
**92512 Boulogne Billancourt Cedex (FR)**

(72) Inventeurs:
- **BENDEJACQ, Denis**
**F-75005 Paris (FR)**
- **JOANICOT, Mathieu**
**F-92290 Chatenay Malabry (FR)**
- **LIZARRAGA, Gilda**
**Cranbury, NJ 08512 (US)**
- **PONSINET, Virginie**
**33000 Bordeaux (FR)**

(74) Mandataire: **Delenne, Marc et al**
**Rhodia Services,**
**Direction de la Propriété Industrielle,**
**40, rue de la Haie-Coq**
**93306 Aubervilliers Cedex (FR)**

(56) Documents cités:
**EP-A- 0 349 232**
**DE-A- 19 602 540**
**US-A- 5 098 959**
**US-A1- 2001 034 428**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

**Description**

La présente invention concerne des copolymères séquencés (copolymères blocs) et plus spécifiquement des copolymères séquencés élastomères thermoplastiques.

Les élastomères thermoplastiques sont connus. Ces polymères présentent des propriétés mécaniques intéressantes (élastomères), associées à des propriétés de manipulation et de formage intéressantes (thermoplastiques). Alors que les élastomères classiques ont usuellement besoin d'une étape de réticulation chimique, usuellement non réversible, avant ou après avoir été formés ou appliqués sur un support, les élastomères thermoplastiques sont réticulés selon un phénomène physique qui est réversible par chauffage. Cette propriété permet d'obtenir des composés élastomères sans étape de réticulation chimique qui peut être difficile à réaliser sur certains supports, ou qui nécessiterait des formations complexes (formulations bicomposants ou multicomposants, ou formulations comprenant un catalyseur actif seulement dans des conditions particulières comme la sécheresse). Les élastomères thermoplastiques peuvent être formés (par extrusion, injection...) ou appliqués sur un support sous une forme fondue. Ils sont utilisés à des fins diverses, y compris les plastiques à toucher doux pour les biens de consommation ou l'intérieur des automobiles, les articles structurels ou mécaniques, les adhésifs. Ils peuvent également être utilisés comme additifs dans les thermoplastiques ou dans les compositions utilisées dans l'industrie du bâtiment pour modifier les propriétés mécaniques desdits thermoplastiques ou compositions.

Les copolymères triblocs comprenant deux blocs latéraux de styrène rigides et un bloc central souple comprenant des motifs dérivés de monomères diènes sont connus et utilisés depuis de nombreuses années. A titre d'exemple, on peut citer les copolymères séquencés de styrène/butadiène/styrène (SBS), les copolymères séquencés de styrène/(éthylène butadiène)/styrène (SEBS) et les hydrogénés. Les blocs de styrène sont des blocs rigides formant une phase rigide dispersée dans une phase souple du bloc central (séparation de microphase). Sans vouloir être lié à une théorie particulière, et en simplifiant, on pense que la dispersion de la phase rigide apporte une cohésion entre les chaînes polymères et l'autre phase présentant des propriétés élastomères. Ce phénomène peut être appelé réticulation selon un phénomène physique. Donc, on pense que la séparation de microphase des blocs est un facteur clé. Quand on la chauffe, la phase rigide fond et les copolymères peuvent être manipulés sous une forme liquide. Des explications concernant la séparation de microphase des copolymères blocs sont données dans Frank S. Bates et Glenn H. Fredrickson, Physics Today, publication février 1999 ; pages 32-38.

Les copolymères triblocs susmentionnés présentent certains inconvénients. D'abord, le bloc central jaunit parfois avec l'âge. Deuxièmement, pour certains usages, par exemples en tant qu'adhésifs ou usages dans lesquels la compatibilisation avec d'autres composés est nécessaire, d'autres fonctions doivent être ajoutées comme des fonctions anhydride, acide carboxylique, ester, époxyde en copolymérisant les comonomères additionnels. Pour éviter le jaunissement et pour satisfaire certains besoins pour certains usages, les blocs dérivés des esters d'acide acrylique ou d'acide méthacrylique pourraient constituer une solution.

En outre, les copolymères triblocs susmentionnés sont usuellement préparés par un procédé de polymérisation anionique avec éventuellement une étape d'hydrogénation. Les procédés de polymérisation anioniques sont usuellement considérés comme chers par rapport aux procédés de polymérisation des radicaux libres. Donc, il existe un besoin en matière de copolymères blocs qui peuvent être préparés par polymérisation des radicaux libres et permettent la séparation de phase des blocs comme expliqué précédemment ou plus simplement, qui présentent des propriétés élastomères. D'autre part, obtenir des polymères de copolymères blocs ayant un poids moléculaire élevé et contrôlé est plus facile avec un procédé de polymérisation anionique qu'avec un procédé de polymérisation des radicaux libres : il peut être difficile d'obtenir des copolymères blocs à poids moléculaire élevé avec une structure contrôlée et avec des poids moléculaires contrôlés par un procédé de polymérisation des radicaux libres. Actuellement, aucune solution n'a été trouvée au problème de la proposition d'un copolymère bloc comprenant un bloc souple dérivé principalement des esters d'acide acrylique ou d'acide méthacrylique, à des coûts modérés. Part ailleurs, on sait que plus le poids moléculaire des blocs est élevé, plus la séparation de phase est facile.

La Demanderesse a trouvé de nouveaux copolymères séquencés qui résolvent certains des besoins ou problèmes susmentionnés. Ces copolymères séquencés comprennent un bloc souple comprenant des esters d'acide acrylique ou d'acide méthacrylique qui évite le jaunissement différé et conduit à des copolymères séquencés ayant des propriétés d'adhérence et de compatibilisation intéressantes. Le copolymère séquencés découvert par la Demanderesse peut être préparé par un procédé de polymérisation des radicaux libres. De là, l'invention concerne également un procédé de fabrication du copolymère bloc.

L'invention concerne un copolymère séquencés (copolymère bloc), qui est un copolymère dibloc (bloc A)-(bloc B), un copolymère tribloc (bloc A)-(bloc B)-(bloc A) ou tribloc (bloc A)-(bloc B)-(bloc C),

- le bloc A étant un bloc rigide, comprenant au moins 55% de motifs récurrents dérivés d'un monomère rigide choisi parmi le groupe constitué du styrène, de l'acrylate d'isobornyle et du méthacrylate d'isobornyle,
- le bloc B étant un bloc souple comprenant au moins 55% de motifs récurrents dérivés d'un monomère souple choisi

parmi le groupe constitué des esters d'acide acrylique, esters d'acide méthacrylique et des mélanges de ces esters,

- le bloc C étant un bloc rigide, comprenant des motifs récurrents dérivés d'un monomère rigide choisi parmi le groupe constitué du styrène, de l'acrylate d'isobornyle et du méthacrylate d'isobornyle,

dans lequel :

- le bloc A comprend plus de 10% en poids de motifs dérivés d'un monomère de ségrégation du bloc A choisi parmi le groupe constitué de l'acide acrylique, l'acide méthacrylique, l'acrylonitrile, du méthacrylonitrile, de la 2-vinylpyridine et 4-vinylpyridine ou
- le bloc B comprend au moins 6% en poids de motifs dérivés d'un monomère de ségrégation du bloc B choisi parmi le groupe constitué de l'acide acrylique, l'acide méthacrylique, l'acrylonitrile, du méthacrylonitrile et des vinylpyrrolidones et
- le copolymère séquencé possède un poids moléculaire de plus de 10 000 g/mol.

Les copolymères séquencés selon l'invention peuvent être sous une forme solide ou séchée. Ils peuvent être dissous dans un solvant organique. Ils peuvent être sous forme d'une dispersion de latex dans un milieu aqueux. Ces dispersions ou solutions sont usuellement destinées à être appliquées sur une surface, et ensuite séchées, pour fabriquer un film ou un revêtement. Sous une forme séchée, le copolymère séquencé selon l'invention présente des propriétés élastomères. Il présente également des propriétés thermoplastiques.

Selon un deuxième aspect, l'invention concerne un procédé de fabrication du copolymère séquencé susmentionné, ledit procédé étant un procédé de polymérisation des radicaux libres, vivante séquencée (et contrôlée), de préférence impliquant l'utilisation d'un agent de transfert comprenant un groupe de formules - S-C(S)-X-, -S-C(S)-S- ou -S-P(S)-X- ou -S-P(S)-S- dans lesquelles X est un atome différent du soufre.

Selon un troisième aspect, l'invention concerne l'utilisation du copolymère bloc défini précédemment en tant qu'adhésif, son utilisation dans une composition adhésive et des compositions adhésives ou produits adhésifs le comprenant.

Le copolymère bloc comprend au moins deux blocs différents : le bloc A et le bloc B. Il est choisi parmi le groupe constitué des copolymères diblocs (bloc A)-(bloc B), copolymères triblocs (bloc A)-(bloc B)-(bloc A) ou triblocs (bloc A)-(bloc B)-(bloc C). Le copolymère bloc est un copolymère bloc linéaire. Par linéaire, on entend que la disposition des blocs est linéaire. Cependant, un bloc peut comprendre des motifs comprenant un groupe macromoléculaire à chaîne latérale.

Un bloc est usuellement défini par les motifs récurrents qu'il comprend. Un bloc peut être défini en nommant un polymère ou en nommant des monomères dont il est dérivé. Dans la présente description, un « motif dérivé d'un monomère » est compris comme étant un motif pouvant être directement obtenu à partir dudit monomère par polymérisation. Ainsi, un « motif dérivé d'un ester d'acide acrylique ou d'acide méthacrylique » n'englobe pas un motif de formule $-CH-CH(COOH)-$ ou $-CH-C(CH_3)(COOH)-$ obtenu par exemple par polymérisation d'un ester d'acide acrylique ou d'acide méthacrylique et ensuite par hydrolysation. Mais un « motif dérivé de l'acide acrylique ou l'acide méthacrylique » englobe par exemple une unité obtenue par polymérisation d'un monomère et réaction pour obtenir des motifs de formule $-CH-CH(COOH)-$ ou $-CH-C(CH_3)(COOH)-$.

Au moins l'un des blocs, le bloc A ou le bloc B, est un copolymère, comprenant au moins deux motifs récurrents différents dérivés d'au moins deux monomères différents. Le bloc A, le bloc B et le bloc C sont des polymères distincts, dérivés de différents monomères, mais ils peuvent comprendre certains motifs récurrents communs. Préférentiellement, le bloc A et le bloc B ne comprennent pas plus de 50% d'un motif récurrent commun (dérivé du même monomère). Le bloc C et le bloc B ne comprennent préférentiellement pas plus de 50% d'un motif récurrent commun (dérivé du même monomère). Le bloc A et le bloc C peuvent comprendre jusqu'à 94% en poids d'un motif récurrent commun.

Il est à noter en outre que dans les copolymères triblocs (bloc A)-(bloc B)-(bloc A), les deux blocs A peuvent avoir un poids moléculaire identique ou différent. Ils peuvent comprendre des motifs dérivés d'un monomère de ségrégation du bloc A identique ou différent. Ils peuvent comprendre une quantité identique ou différente (plus de 10% en poids) de motifs dérivés dudit monomère de ségrégation. Le bloc C est un bloc qui ne comprend pas de motifs dérivés d'un monomère de ségrégation du bloc A ou qui ne comprend pas plus de 6% en poids de motifs dérivés d'un monomère de ségrégation du bloc A.

Le bloc A et le bloc C sont appelés blocs rigides. Le bloc B est appelé bloc souple. Dans la présente description, les mots "rigide" et "souple" désignent la propriété qu'un bloc aurait sans l'autre bloc(s) qui est la propriété d'un polymère composé des mêmes motifs récurrents que ledit bloc ayant préférentiellement le même poids moléculaire. Un polymère ou bloc rigide a usuellement une température de transition vitreuse de plus de 50°C et préférentiellement supérieure à 100°C. Un polymère ou bloc souple a usuellement une température de transition vitreuse inférieure à 20°C, plus préférentiellement inférieure à 0°C.

Dans la présente description, l'expression "monomères rigides" désigne des monomères dont le polymère

dérivé serait rigide. Dans la présente description, l'expression "monomères souples" désigne des monomères dont le polymère dérivé serait souple.

Dans la présente description, le poids moléculaire d'un copolymère bloc désigne le poids moléculaire moyen pondéré du copolymère bloc. Le poids moléculaire moyen pondéré du polymère peut être mesuré par chromatographie par perméation de gel (GPC). Dans la présente description, le poids moléculaire d'un bloc désigne le poids moléculaire calculé à partir des quantités de monomères, polymères (par exemple autre bloc), initiateurs et/ou agents de transfert utilisés pour fabriquer le bloc. L'homme du métier sait comment calculer ces poids moléculaires. Les rapports en poids entre les blocs désignent les rapports entre les quantités de composés utilisées pour fabriquer lesdits blocs, en prenant en compte une polymérisation extensive.

Typiquement, le poids moléculaire M d'un bloc est calculé selon la formule suivante :

$$M = \sum_i M_i * \frac{n_i}{n_{précurseur}},$$

dans laquelle $M_i$ est le poids moléculaire d'un monomère i, ni est le nombre de moles d'un monomère i et $n_{précurseur}$ est le nombre de moles d'un composé auquel la chaîne macromoléculaire du bloc sera reliée. Ledit composé peut être un agent de transfert ou un groupe de transfert ou un bloc précédent. Si c'est un bloc précédent, le nombre de moles peut être considéré comme le nombre de moles d'un composé auquel la chaîne macromoléculaire dudit bloc précédent a été reliée, par exemple un agent de transfert ou un groupe de transfert. Il peut être également obtenu par calcul à partir d'une valeur mesurée du poids moléculaire dudit bloc précédent. Si les deux blocs sont simultanément cultivés à partir d'un bloc précédent, aux deux extrémités, le poids moléculaire calculé selon la formule précédente doit être divisé par deux.

Selon un premier mode de réalisation :

- le bloc A comprend au moins 55% en poids de motifs dérivés des monomères rigides détaillés ci-après,
- le bloc A comprend plus de 10%, de préférence au moins 15% en poids de motifs dérivés des monomères de ségrégation du bloc A détaillés ci-après,
- le bloc B comprend au moins 55% en poids de motifs dérivés des monomères souples détaillés ci-après,
- le bloc B ne comprend aucun motif dérivé des monomères de ségrégation du bloc B détaillés ci-après ou ne comprend pas plus de 6% de motifs quelconques dérivés des monomères de ségrégation du bloc B détaillés ci-après.

Selon un deuxième mode de réalisation :

- le bloc A comprend au moins 55% en poids de motifs dérivés des monomères rigides détaillés ci-après,
- le bloc A ne comprend aucun motif dérivé des monomères de ségrégation du bloc A détaillés ci-après ou ne comprend pas plus de 6% de motifs quelconques dérivés des monomères de ségrégation du bloc A détaillés ci-après.
- le bloc B comprend au moins 55% en poids de motifs dérivés des monomères souples détaillés ci-après,
- le bloc B comprend au moins 6%, de préférence au moins 10%, même plus préférentiellement au moins 15% en poids de motifs dérivés des monomères de ségrégation du bloc B détaillés ci-après.

Selon un troisième mode de réalisation :

- le bloc A comprend au moins 55% en poids de motifs dérivés des monomères rigides détaillés ci-après,
- le bloc A comprend plus de 10%, de préférence au moins 15% en poids de motifs dérivés des monomères de ségrégation du bloc A détaillés ci-après,
- le bloc B comprend au moins 55% en poids de motifs dérivés des monomères souples détaillés ci-après,
- le bloc B comprend au moins 6%, de préférence au moins 10%, même plus préférentiellement au moins 15% en poids de motifs dérivés des monomères de ségrégation du bloc B détaillés ci-après.
- les monomères de ségrégation du bloc B sont différents des monomères de ségrégation du bloc A.

Les copolymères blocs selon les trois modes de réalisation précédents peuvent également comprendre un bloc C, comprenant des motifs dérivés des monomères rigides détaillés ci-après. Le bloc C ne comprend aucun motif dérivé des monomères de ségrégation du bloc A détaillés ci-après ou ne comprend pas plus de 6% de motifs quelconques dérivés des monomères de ségrégation du bloc A détaillés ci-après. De préférence, le bloc C comprend au moins 80% en poids, de préférence au moins 94% en poids de motifs dérivés de monomères rigides.

Le bloc A et le bloc B peuvent comprendre certains motifs différents des motifs dérivés de monomères rigides et des monomères de ségrégation (monomères de ségrégation du bloc A ou du bloc B) détaillés ci-après. Si ce n'est pas le cas, la quantité en poids de motifs dérivés des monomères rigides, respectivement souples, est égale à 100% moins la quantité des monomères de ségrégation du bloc A, respectivement bloc B.

Les monomères rigides susmentionnés sont choisis parmi le groupe constitué du styrène, de l'acrylate d'isobornyle et du méthacrylate d'isobornyle.

Les monomères de ségrégation du bloc A susmentionnés sont choisis parmi le groupe constitué de l'acide acrylique, l'acide méthacrylique, l'acrylonitrile, du méthacrylonitrile, de la 2-vinylpyridine et 4-vinylpyridine.

Les monomères souples susmentionnés sont choisis parmi le groupe constitué des esters d'acide acrylique et esters d'acide méthacrylique, comme l'acrylate de 2-éthylhexyle, le méthacrylate de 2-éthylhexyle, l'acrylate d'éthyle, le méthacrylate d'éthyle, l'acrylate de butyle et le méthacrylate de butyle. Des mélanges de ces monomères peuvent être utilisés pour obtenir un bloc comprenant des motifs dérivés de celui-ci, le bloc étant donc un copolymère aléatoire. Utiliser des mélanges permet de contrôler la température de transition vitreuse du bloc souple. Par exemple, des mélanges d'acrylate d'hexyle ou de méthacrylate d'hexyle et d'acrylate de butyle ou de méthacrylate de butyle peuvent être utilisés. Ces monomères, leurs motifs dérivés et le bloc ou polymère comprenant lesdits motifs sont usuellement considérés comme hydrophobes.

Les monomères de ségrégation du bloc B susmentionnés sont choisis parmi le groupe constitué de l'acide acrylique, l'acide méthacrylique, l'acrylonitrile, du méthacrylonitrile et des vinylpyrrolidones.

Sans vouloir être lié à une théorie particulière, on pense que les monomères désignés comme monomères de ségrégation renforcent l'incompatibilité d'un bloc avec un autre et permettent donc une ségrégation de phase, une phase rigide étant dispersée est une phase souple continue. Les monomères de ségrégation du bloc A renforceraient l'incompatibilité du bloc A par rapport au bloc B. Les monomères de ségrégation du bloc B renforceraient l'incompatibilité du bloc B par rapport au bloc A. Certains monomères pourraient aussi bien renforcer l'incompatibilité du bloc A par rapport au bloc B que l'incompatibilité du bloc B par rapport au bloc A. Donc, certains monomères sont considérés comme monomères de ségrégation du bloc A et/ou monomères de ségrégation du bloc B. Cependant, on préfère que les deux blocs A et B comprennent plus de 6% en poids de monomères de ségrégation, que le monomère de ségrégation du bloc A soit différent du monomère de ségrégation du bloc B ou que la quantité (% en poids) des monomères de ségrégation du bloc A dans le bloc A soit différente de la quantité (% en poids) des monomères de ségrégation du bloc B dans le bloc B.

Le copolymère séquencé de l'invention possède un poids moléculaire d'au moins 10 000 g/mol, de préférence d'au moins 25 000 g/mol et même plus préférentiellement d'au moins 50 000 g/mol. Le poids moléculaire est usuellement inférieur à 200 000 g/mol. Il peut être inférieur à 150 000 g/mol et même inférieur à 100 000 g/mol. Obtenir les propriétés d'un élastomère thermoplastique ayant une phase rigide dispersée dans une phase élastomère continue, à ces faibles poids moléculaires, est l'un des bénéfices et intérêts de l'invention.

De préférence, le bloc A possède un poids moléculaire situé entre 1 000 et 30 000 et plus préférentiellement entre 3 000 et 15 000 g/mol. De préférence, le bloc B possède un poids moléculaire situé entre 6000 et 12 000 et plus préférentiellement entre 6 000 et 97 000 g/mol. Plus préférentiellement, le bloc B possède un poids moléculaire compris entre 20 000 et 80 000 g/mol.

Le rapport entre le poids moléculaire du ou des blocs A et le poids moléculaire du bloc B est préférentiellement compris entre 0,45 et 0,5, plus préférentiellement entre 0,05 et 0,3.

De préférence, le bloc A provient principalement du styrène et le bloc B provient principalement de l'acrylate d'éthyle ou de l'acrylate de butyle, par exemple comme suit :

- le bloc A comprend de 75% à 90% en poids de motifs dérivés du styrène et de 10% à 25% en poids de motifs dérivés de l'acide acrylique ou de l'acide méthacrylique et
- le bloc B comprend au moins 75% en poids de motifs dérivés de l'acrylate d'éthyle, de l'acrylate de butyle ou mélanges de ceux-ci.

Selon un premier mode de réalisation préféré, le copolymère bloc est un copolymère dibloc (bloc A)-(bloc B) où le bloc A comprend des motifs dérivés du styrène et des motifs dérivés de l'acide méthacrylique et le bloc B comprend des motifs dérivés de l'acrylate d'éthyle et où :

- le bloc A comprend de 75% à 90% en poids de motifs dérivés du styrène et de 10% à 25% en poids de motifs dérivés de l'acide méthacrylique et
- le bloc B comprend au moins 75% en poids de motifs dérivés de l'acrylate d'éthyle ou un mélange d'acrylate d'éthyle et d'acrylate de butyle.

Selon un deuxième mode de réalisation préféré, le copolymère séquencé est un copolymère tribloc (bloc A)-(bloc B)-(bloc A) où le bloc A comprend des motifs dérivés du styrène et des motifs dérivés de l'acide méthacrylique

et le bloc B comprend des motifs dérivés de l'acrylate d'éthyle et où :

- le bloc A comprend de 75% à 90% en poids de motifs dérivés du styrène et de 10% à 25% en poids de motifs dérivés de l'acide méthacrylique et
- le bloc B comprend au moins 75% en poids de motifs dérivés de l'acrylate d'éthyle ou un mélange d'acrylate d'éthyle et d'acrylate de butyle.

Selon un troisième mode de réalisation préféré, le copolymère séquencé est un copolymère tribloc (bloc A)-(bloc B)-(bloc A), où le bloc A comprend des motifs dérivés du styrène et des motifs dérivés de l'acide méthacrylique et le bloc B comprend des motifs dérivés de l'acrylate de butyle et où :

- le bloc A comprend de 75% à 90% en poids de motifs dérivés du styrène et de 10% à 25% en poids de motifs dérivés de l'acide acrylique ou de l'acide méthacrylique et
- le bloc B comprend au moins 75% en poids de motifs dérivés de l'acrylate de butyle.

Selon un quatrième mode de réalisation préféré, le copolymère bloc est un copolymère tribloc (bloc A)-(bloc B)-(bloc A) où le bloc A comprend des motifs dérivés du styrène et des motifs dérivés de l'acide méthacrylique et le bloc B comprend des motifs dérivés de l'acrylate de 2-éthylhexyle et où :

- le bloc A comprend de 75% à 90% en poids de motifs dérivés du styrène et de 10% à 25% en poids de motifs dérivés de l'acide méthacrylique et
- le bloc B comprend au moins 75% en poids de motifs dérivés de l'acrylate de 2-éthylhexyle ou un mélange d'acrylate de 2-éthylhexyle et d'acrylate d'éthyle et/ou d'acrylate de butyle.

Selon un cinquième mode de réalisation préféré, le copolymère séquencé est un copolymère tribloc (bloc A)-(bloc B)-(bloc C) où le bloc A comprend des motifs dérivés du styrène et des motifs dérivés de l'acide méthacrylique, le bloc B comprend des motifs dérivés de l'acrylate de 2-éthylhexyle, de l'acrylate de butyle ou de l'acrylate d'éthyle et le bloc C comprend des motifs dérivés du styrène et où :

- le bloc A comprend de 75% à 90% en poids de motifs dérivés du styrène et de 10% à 25% en poids de motifs dérivés de l'acide méthacrylique et
- le bloc B comprend au moins 75% en poids de motifs dérivés de l'acrylate de 2-éthylhexyle, de l'acrylate de butyle et/ou de l'acrylate d'éthyle ou des mélanges de ceux-ci et
- le bloc C comprend au moins 94% en poids de motifs de styrène.

Les copolymères séquencés selon l'invention peuvent être obtenus par différents procédés. Des exemples de procédés comprennent les procédés de polymérisation des radicaux libres "vivante" ou "contrôlée". Ces procédés impliquent l'utilisation d'un agent de transfert spécifique pour obtenir cet effet.

En général, les copolymères blocs peuvent être obtenus par tout procédé de polymérisation "vivante" ou "contrôlée" comme par exemple :

- la polymérisation des radicaux libres contrôlée par les xanthates selon l'enseignement de la demande WO 98/58974 et le brevet US 6 153 705,
- la polymérisation des radicaux libres contrôlée par les dithioesters selon l'enseignement de la demande WO 98/01478,
- la polymérisation des radicaux libres contrôlée par les dithioesters selon l'enseignement de la demande WO 99/35178,
- la polymérisation des radicaux libres contrôlée par les dithiocarbamates selon l'enseignement de la demande WO 99/35177,
- la polymérisation des radicaux libres utilisant les précurseurs de nitroxyde selon l'enseignement de la demande WO 99/03894,
- la polymérisation des radicaux libres contrôlée par les dithiocarbamates selon l'enseignement de la demande WO 99/31144,
- la polymérisation des radicaux libres contrôlée par les dithiocarbazates selon l'enseignement de la demande WO 02/26836,
- la polymérisation des radicaux libres contrôlée par les xanthates halogénés selon l'enseignement de la demande WO 00/75207 et la demande US 09/980 387,
- la polymérisation des radicaux libres contrôlée par les dithiophosphoroesters selon l'enseignement de la demande

WO 02/10223,

- la polymérisation des radicaux libres contrôlée par un agent de transfert en présence d'un composé disoufré selon l'enseignement de la demande WO 02/22688,
- la polymérisation radicalaire contrôlée par transfert d'atomes (ATRP) selon l'enseignement de la demande WO 96/30421,
- la polymérisation radicalaire contrôlée par des iniferters selon l'enseignement de Otu et al., Makromol. Chem. Rapid. Commun., 3,127 (1982),
- la polymérisation radicalaire contrôlée par transfert dégénératif de l'iode selon l'enseignement de Tatemoto et al., Jap. 50, 127, 991 (1975), Daikin Kogyo Co Ltd Japan et Matyjaszewski et al., Macromolecules, 28, 2093 (1995),
- la polymérisation par transfert de groupe selon l'enseignement de Webster O.W., "Group Transfer Polymerization", p. 580-588, dans "Encyclopedia of Polymer Science and Engineering", vol. 7, édité par H.F. Mark, N.M. Bikales, C.G. Overberger et G. Menges, Wiley Interscience, New York, 1987,
- la polymérisation radicalaire contrôlée par des dérivés de tétraphényléthane (D. Braun et al., Macromol. Symp., 111, 63 (1996)),
- la polymérisation radicalaire contrôlée par des complexes organocobalt (Wayland et al., J. Am. Chem. Soc., 116, 7973 (1994)).

Les procédés préférés sont les procédés de polymérisation de radicaux libres vivante séquencée impliquant l'utilisation d'un agent de transfert. Les agents de transfert préférés sont des agents comprenant un groupe de formules -S-C(S)-Y-, -S-C(S)-S- ou -S-P(S)-Y ou -S-P(S)-S- dans lesquelles Y est un atome différent du soufre comme un atome d'oxygène, un atome d'azote et un atome de carbone. Ils comprennent des groupes dithioester, des groupes thioétherthione, des groupes dithiocarbamate, dithiophosphoroesters, dithiocarbazates et des groupes xanthate. Les exemples de groupes contenus dans les agents de transfert préférés comprennent des groupes de formules $-S-C(S)-NR-NR'_2$, $-S-C(S)-NR-N=CR'_2$, -S-C(S)-O-R, -S-C(S)-X dans lesquelles R et R' sont des atomes d'hydrogène identiques ou différents ou des groupes organiques comme les groupes hydrocarbyle, éventuellement substitués, éventuellement comprenant des hétéroatomes et X est un atome d'halogène. Un procédé de polymérisation préféré est une polymérisation radicalaire vivante utilisant des xanthates.

Un procédé de polymérisation des radicaux libres "vivante" ou "contrôlée" utilisée pour fabriquer des copolymères séquencés comprend par exemple les étapes consistant à :

a) faire réagir des monomères ou un mélange de monomères, au moins un composé de source de radicaux libres et un agent de transfert pour obtenir un premier bloc (de préférence un bloc A), l'agent de transfert étant lié au premier dit bloc,
b) faire réagir le premier bloc, les monomères et un mélange de monomères et éventuellement au moins un composé de source de radicaux pour obtenir un copolymère dibloc (de préférence (bloc A)-(bloc B)),
c) éventuellement, faire réagir le copolymère dibloc, les monomères ou un mélange de monomères et éventuellement au moins un composé de source de radicaux pour obtenir un copolymère tribloc (de préférence (bloc A)-(bloc B)-(bloc A) ou (bloc A)-(bloc B)-(bloc C)), puis
d) éventuellement faire réagir l'agent de transfert avec des moyens pour le rendre inactif ou pour l'éliminer.

Au cours de l'étape a), un premier bloc du polymère de copolymère séquencé est préparé, de préférence le bloc A, en utilisant préférentiellement des monomères rigides et éventuellement des monomères de ségrégation du bloc A. Au cours de l'étape b), un deuxième bloc est obtenu, préférentiellement un bloc B, relié au premier bloc pour obtenir un copolymère dibloc, préférentiellement le bloc B, en utilisant des monomères souples et éventuellement des monomères de ségrégation du bloc B. Au cours de l'étape facultative c), un troisième bloc est obtenu, relié au deuxième bloc, préférentiellement un bloc A ou bloc C pour obtenir un copolymère tribloc, en utilisant des monomères rigides et éventuellement des monomères de ségrégation du bloc A. Au cours de l'étape d), on fait réagir l'agent de transfert pour le rendre inactif, ou pour éviter l'odeur ou le jaunissement.

Les exemples d'agents de transfert sont des agents de transfert de la formule suivante (I) :

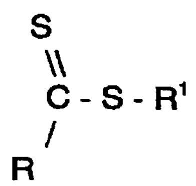

(I)

dans laquelle :

- R représente un groupe $R^2O$-, $R^2R'^2N$- ou $R^3$-, $R^2$ et $R'^2$ qui sont identiques ou différents, représentant (i) un groupe allcyle, acyle, aryle, alcène ou alkyne ou (ii) un noyau carboné saturé ou insaturé, éventuellement aromatique, ou (iii) un hétérocycle saturé ou insaturé, ces groupes et noyaux (i), (ii) et (iii) pouvant être substitué, $R^3$ représentant H, Cl, un groupe alkyle, aryle, alcène ou alkyne, un (hétéro)cycle saturé ou insaturé, éventuellement substitué, un groupe alkylthio, alcoxycarbonyle, aryloxycarbonyle, carboxyle, acyloxy, carbamoyle, cyano, dialkylphosphonato ou diarylphosphonato ou un groupe dialkylphosphinato ou diarylphosphinato ou une chaîne polymère,
- $R^1$ représente (i) un groupe alkyle, acyle, aryle, alcène ou alkyne, éventuellement substitué ou (ii) un noyau carboné qui est saturé ou insaturé et qui est éventuellement substitué ou aromatique ou (iii) un hétérocycle saturé ou insaturé, éventuellement substitué, ou une chaîne polymère, et

les groupes $R^1$, $R^2$, $R'^2$ et $R^3$ peuvent être substitués par des groupes phényle ou alkyle substitués, des groupes aromatiques substitués ou les groupes suivants : oxo, alcoxycarbonyle ou aryloxycarbonyle (-COOR), carboxyle (-COOH), acyloxy ($-O_2CR$), carbamoyle ($-CONR_2$), cyano (-CN), alkylcarbonyle, alkylarylcarbonyle, arylcarbonyle, arylallcylcarbonyle, isocyanato, phtalimido, maléimido, succinimido, amidino, guanidino, hydroxyle (-OH), amino ($-NR_2$), halogène, allyle, époxy, alcoxy (-OR), S-alkyle, S-aryle ou silyle, des groupes présentant une nature hydrophile ou ionique, comme les sels alcalins d'acides carboxyliques ou sels alcalins d'acide sulfonique, des chaînes de poly(alkylène oxyde) (PEO, PPO) ou les substituants cationiques (sels d'ammonium quaternaire), R représentant un groupe alkyle ou aryle.

De préférence, l'agent de transfert de formule (I) est un dithiocarbonate choisi parmi les composés de formules suivantes (IA), (IB) et (IC) :

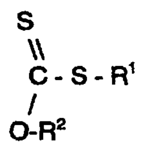

(IA)

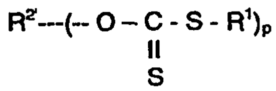

(IB)

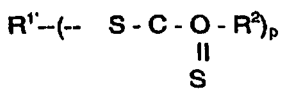

(IC)

dans lesquelles :

- $R^2$ et $R^{2'}$ représentent (i) un groupe alkyle, acyle, aryle, alcène ou alkyne ou (ii) un noyau carboné saturé ou insaturé, éventuellement aromatique, ou (iii) un hétérocycle saturé ou insaturé, les groupes et noyaux (i), (ii) et (iii) pouvant être substitués,
- $R^1$ et $R^{1'}$ représentent (i) un groupe alkyle, acyle, aryle, alcène ou alkyne ou (ii) un noyau carboné qui est saturé ou insaturé et qui est éventuellement substitué ou aromatique ou (iii) un hétérocycle saturé ou insaturé, éventuellement substitué ou une chaîne polymère, et
- p est un nombre entre 2 et 10.

D'autres exemples d'agents de transfert sont des agents de transfert des formules suivantes (II) et (III) :

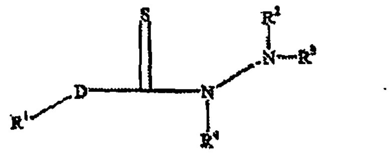

(II)

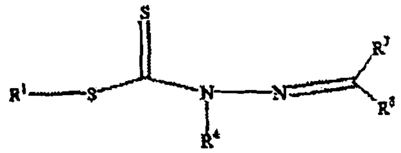

(III)

dans lesquels

- $R^1$ est un groupe organique, par exemple un groupe $R^1$ tel que défini précédemment pour les agents de transfert de formules (I), (IA), (IB) et (IC),
- $R^2$, $R^3$, $R^4$, $R^7$ et $R^8$ qui sont identiques ou différents sont des atomes d'hydrogène ou des groupes organiques, formant éventuellement des noyaux. Des exemples de groupes organiques $R^2$, $R^3$, $R^4$, $R^7$ et $R^8$ comprennent des hydrocarbyles, des hydrocarbyles substitués, des hydrocarbyles contenant un hétéroatome et des hydrocarbyles contenant un hétéroatome substitués.

Selon le procédé susmentionné, si toutes les polymérisations successives sont réalisées dans le même réacteur, il est généralement préférable que tous les monomères utilisés pendant une étape aient été consumés avant que la polymérisation de l'étape suivante ne commence, par conséquent avant que les nouveaux monomères ne soient introduits. Cependant, il peut arriver que certains monomères de l'étape précédente soient toujours présents dans le réacteur pendant la polymérisation du bloc suivant. Dans ce cas, ces monomères ne représentent pas en général plus de 5% mol de tous les monomères et ils participent à la polymérisation suivante en contribuant à l'introduction d'autres motifs dans le bloc suivant.

La polymérisation peut être réalisée dans un milieu solvant aqueux et/ou organique. La polymérisation peut également être réalisée sous une forme fondue essentiellement pure (polymérisation en masse) ou selon le procédé de type latex dans un milieu aqueux.

Le copolymère séquencé peut être sous forme solide et/ou séchée. Il peut être également en solution dans un solvant organique. Il peut être également sous forme d'une dispersion en milieu aqueux sous une forme latex. Il dépend usuellement du procédé utilisé pour sa préparation. S'il ne se présente pas sous forme solide et/ou séchée, le solvant ou le milieu aqueux est usuellement destiné à être éliminé pour obtenir le copolymère séquencé sous forme solide et/ou séchée. Par exemple, le solvant ou le milieu aqueux peut être éliminé par évaporation ou séchage, une fois que la solution ou la dispersion de latex a été appliquée sur une surface pour obtenir un film ou un revêtement, sous une forme solide et/ou séchée.

S'il est sous forme solide, le copolymère séquencé selon l'invention peut être fondu, être formé, ou appliqué sur une surface. Ensuite, il peut être refroidi pour obtenir un article, film ou revêtement solide.

On pense que quand il se trouve sous forme solide ou séchée, le bloc souple du copolymère séquencé selon l'invention forme une phase souple continue et le ou les blocs rigides forment une phase rigide, la phase rigide étant dispersée dans la phase souple. Comme expliqué précédemment et sans vouloir être lié à une théorie quelconque, on pense que la séparation de phase apporte une cohésion par une réticulation selon un phénomène physique.

Quand il est sous forme solide ou séchée, le copolymère séquencé de l'invention présente une propriété élastomère et une propriété thermoplastique. Il peut être désigné élastomère thermoplastique.

Ainsi, le copolymère séquencé selon l'invention possède sous une forme solide ou séchée, un allongement à la rupture d'au moins 500% et une résistance à la traction d'au moins 1,5 MPa. Préférentiellement, l'allongement à la rupture est d'au moins 750% et la résistance à la traction est d'au moins 2,0 MPa. Ces propriétés sont considérées comme étant les propriétés d'un composé élastomère.

Les copolymères séquencés de l'invention trouvent un usage dans de nombreux domaines. Ils peuvent être utilisés par exemple pour les articles de fabrication. Les copolymères blocs selon l'invention sont par exemple sous forme de poudres, pastilles, granulés solides, éventuellement compoundés avec d'autres ingrédients, pour être fondus, introduits dans un moule sous une forme liquide, puis refroidis pour obtenir un article sous une forme solide. Les articles

obtenus à partir de copolymères blocs présentent usuellement un toucher intéressant, qui peut être appelé souple ou collant (comparés aux autres thermoplastiques)... Les articles obtenus à partir des copolymères blocs selon l'invention présentent également des propriétés élastomères qui peuvent être nécessaires. Les propriétés thermoplastiques permettent de fabriquer des articles ayant des propriétés élastomères avec des formes qui seraient difficiles à obtenir avec un polymère ou une composition qui nécessiterait une réticulation chimique. Elles peuvent simplifier le procédé de fabrication d'articles élastomères ou simplifier les compositions utilisées pour fabriquer ces articles.

Il est à noter que pour fabriquer des articles, le copolymère séquencé peut être utilisé seul ou avec certains autres ingrédients, sous forme d'un composé dans une formulation plastique d'ingénierie. En fonction de la quantité des différents ingrédients, le copolymère séquencé peut être considéré comme un additif pour modifier les propriétés d'autres polymères ou comme un polymère ayant des propriétés modifiées par d'autres ingrédients. On mentionne en outre que le copolymère peut comprendre des motifs qui renforcent la compatibilité avec d'autres composés d'une composition comme des motifs comprenant un groupe époxy ou un groupe anhydride maléique. Les groupes utiles sont connus par l'homme du métier des formulations thermoplastiques.

Certains copolymères séquencés selon l'invention peuvent être utilisés à titre de composés adhésifs. Ils peuvent être utilisés comme composé dans une composition adhésive. Les copolymères blocs dans lesquels le monomère souple est l'acrylate de butyle ou le méthacrylate de butyle sont spécifiquement préférés pour l'utilisation comme composé adhésif. On mentionne en outre que le copolymère peut comprendre des motifs qui renforcent les propriétés adhésives ou la compatibilité avec d'autres composés comme les motifs comprenant un groupe époxy ou un groupe d'anhydride maléique. Les groupes utiles sont connus par l'homme du métier des compositions adhésives.

Par exemple, les copolymères séquencés selon l'invention ou les compositions comprenant lesdits copolymères séquencés, de préférence les copolymères séquencés dans lesquels le monomère souple est l'acrylate de butyle ou le méthacrylate de butyle, peuvent être déposés sur une surface sous une forme fondue, sous la forme d'une solution ou sous la forme d'une dispersion de latex dans un milieu aqueux pour obtenir une couche adhésive. La surface est par exemple une couche de base, formant un ruban adhésif, en compagnie d'une couche adhésive. Donc, la surface sur laquelle la composition est déposée peut être par exemple un film plastique ou un produit de type papier.

Le copolymère séquencé selon l'invention peut être compris dans les formulations destinées à être appliquées sur une surface, utilisées dans la construction du bâtiment ou dans l'aménagement de la maison, par exemple les formulations de peinture (les peintures industrielles, les peintures domestiques ou décoratives). Le copolymère bloc peut aussi être compris dans un mastic, un ciment ou une formulation de charge. Les formulations dans lesquelles le copolymère bloc se présente sous forme d'une dispersion de latex sont particulièrement préférées. Alors que la dispersion n'est pas très visqueuse dans les peintures, la viscosité du mastic, du ciment ou de la formulation de charge est usuellement assez élevée. Le copolymère séquencé peut donner un revêtement ou une couche de peinture ayant certaines propriétés particulières en relation avec l'élasticité comme la résistance aux fissures, la résistance aux chocs, la résistance aux marques, la résistance au dépôt de saletés...Les mastics, ciments ou charges comprenant le copolymère bloc selon l'invention présentent des propriétés améliorées par rapport aux mastics, ciments ou charges comprenant des polymères à base d'ester d'acide (méth)acrylique. Ce que l'on appelle la réticulation par un phénomène physique susmentionné rend l'usage des copolymères séquencés particulièrement utile puisqu'il n'existe nul besoin de réaliser d'étape de réticulation une fois que la formulation a été appliquée sur une surface ou d'utiliser des formulations complexes, très sensibles ou nocives pour l'environnement ou la santé (formulations à deux packs, formulation comprenant un catalyseur qui est inhibé en présence d'eau...). Ce que l'on appelle la réticulation par un phénomène physique permet aussi de contrôler les propriétés d'écoulement et d'adhérence.

Certains exemples sont donnés ci-après pour une meilleure compréhension de l'invention.

<u>Exemple 1: copolymère dibloc de poly(styrène/acide méthacrylique)-bloc-poly(acrylate d'éthyle/acide méthacrylique) (St/MMA)-b-(EtA/MMA) où St/MMA = 80/20 et EtA/MMA = 95/5</u>

<u>Etape 1 : Synthèse d'un bloc statistique (St/MMA) de styrène (St) et d'acide méthacrylique (MMA) avec un rapport en poids de St/MAA=80/20.</u>

On réalise une polymérisation dans des conditions d'émulsion dans un réacteur chemisé équipé d'un agitateur en acier inoxydable à trois lames. 300 g d'eau, 7,46 g de sulfate de dodécyle sodique (Aldrich) et 1,87 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 3,00 g de styrène, 1,56 g de $\alpha$-(o-éthylxanthyl)proprionate de méthyle $(CH_3CHCO_2Me)SCSOEt$ et 0,75 g d'acide méthacrylique est incorporé. La température est ultérieurement portée à 85°C et 0,31 g de persulfate d'ammonium $(NH_4)_2S_2O_8$ a été ajouté. Au bout de cinq minutes, l'addition est poursuivie par 27,0 g de styrène, 6,75 g d'acide méthacrylique pendant une heure. Une fois l'addition achevée, on obtient une émulsion de copolymère (latex) maintenue à 85°C pendant une heure.

Etape 2 : Synthèse d'un bloc statistique (EtA/MMA) d'acrylate d'éthyle (EtA) et d'acide méthacrylique (MMA) avec un rapport en poids : EtA/MAA=95/5 pour obtenir un copolymère dibloc.

58,12 g de l'émulsion de copolymère obtenue précédemment sont retirés du réacteur. 0,13 g de persulfate d'ammonium $(NH_4)_2S_2O_8$ et 5,0 g d'eau sont ajoutés à l'émulsion restant dans le réacteur à 85°C. Au bout de cinq minutes, on a commencé l'addition d'un mélange suivant comprenant :

- 363,78 g d'acrylate d'éthyle (EtA) et
- 19,15 g d'acide méthacrylique (MAA)

et simultanément d'un autre mélange comprenant :

- 385 g d'eau et
- 1,06 g de $Na_2CO_3$.

L'addition dure 1 heure. Le système est maintenu à cette température pendant trois heures supplémentaires.
Le poids moléculaire calculé du bloc de (St/MMA) est de 5000 g/mol et le poids moléculaire calculé du bloc de (EtA/MMA) est de 62 500 g/mol.

Exemple 2: tribloc de poly(styrène/acide méthacrylique)-bloc-poly(acrylate d'éthyle/acide méthacrylique)-bloc poly(styrène/acide méthacrylique) (St/MMA)-b-(EtA)-b-(St/MMA) où St/MMA = 80/20 dans le premier bloc, St/MMA=98/2 dans le troisième bloc et EtA/MMA = 95/5

Etape 1 : Synthèse d'un premier bloc statistique (St/MMA) de styrène (St) et d'acide méthacrylique (MAA) avec un rapport en poids de St/MAA=80/20.

On réalise une polymérisation dans des conditions d'émulsion dans un réacteur chemisé équipé d'un agitateur en acier inoxydable à trois lames. 300 g d'eau, 7,46 g de sulfate de dodécyle sodique (Aldrich) et 1,87 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 3,00 g de styrène, 1,56 g de $\alpha$-(o-éthylxanthyl)proprionate de méthyle $(CH_3CHCO_2Me)SCSOEt$ et 0,75 g d'acide méthacrylique est incorporé. La température est ultérieurement portée à 85°C et 0,31 g de persulfate d'ammonium $(NH_4)_2S_2O_8$ a été ajouté. Au bout de cinq minutes, l'addition est poursuivie par 27,0 g de styrène, 6,75 g d'acide méthacrylique pendant une heure. Une fois l'addition achevée, on obtient une émulsion de copolymère (latex) maintenue à 85°C pendant une heure.

Etape 2 : Synthèse d'un deuxième bloc statistique (EtA/MMA) d'acrylate d'éthyle (EtA) et d'acide méthacrylique (MMA) avec un rapport en poids : EtA/MAA=95/5 pour obtenir un copolymère dibloc.

58,12 g de l'émulsion de copolymère obtenue précédemment sont retirés du réacteur. 0,13 g de persulfate d'ammonium $(NH_4)_2S_2O_8$ et 5,0 g d'eau sont ajoutés à l'émulsion restant dans le réacteur à 85°C. Au bout de cinq minutes, on a commencé l'addition d'un mélange suivant comprenant :

- 363,78 g d'acrylate d'éthyle (EtA) et
- 19,15 g d'acide méthacrylique (MAA)
  et simultanément d'un autre mélange comprenant :

- 385 g d'eau et
- 1,06 g de $Na_2CO_3$.

L'addition dure 1 heure. Le système est maintenu à cette température pendant trois heures supplémentaires. On obtient une émulsion de copolymère (latex).

Etape 3 : Synthèse d'un troisième bloc statistique (St/MMA) de styrène (St) et d'acide méthacrylique (MMA) avec un rapport en poids: St/MAA=98/2 pour obtenir un copolymère tribloc.

212,94 g de l'émulsion de copolymère obtenue précédemment sont retirés du réacteur. 0,05 g de persulfate d'ammonium $(NH_4)_2S_2O_8$ et 4,0 g d'eau sont ajoutés à l'émulsion restant dans le réacteur à 85°C. Au bout de cinq

minutes, on a commencé l'addition d'un mélange suivant comprenant :

- 24,02 g de styrène (St) et
- 0,49 g d'acide méthacrylique (MAA)

et simultanément d'un autre mélange comprenant :

- 32,0 g d'eau et
- 0,03 g de $Na_2CO_3$.

L'addition dure 1 heure. Le système est maintenu à cette température pendant trois heures supplémentaires. On obtient une émulsion de copolymère (latex).

Le poids moléculaire calculé du premier bloc de (St/MMA) est de 5000 g/mol, le poids moléculaire calculé du deuxième bloc de (EtA/MMA) est de 62 500 g/mol et le poids moléculaire calculé du troisième bloc de (St/MMA) est de 500 g/mol.

<u>Exemple 3 (comparatif): dibloc de poly(styrène/acide méthacrylique)-bloc-poly(acrylate d'éthyle/acide méthacrylique) (St/MMA)-b-(EtA/MMA) où St/MMA = 96/4 et EtA/MMA = 95/5</u>

<u>Etape 1 : Synthèse d'un bloc statistique (St/MMA) de styrène (St) et d'acide méthacrylique (MAA) avec un rapport en poids de St/MAA=96/4.</u>

On réalise une polymérisation dans des conditions d'émulsion dans un réacteur chemisé équipé d'un agitateur en acier inoxydable à trois lames. 450 g d'eau, 9,32 g de sulfate de dodécyle sodique (Aldrich) et 0,38 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 4,50 g de styrène, 1,95 g de $\alpha$-(o-éthylxanthyl)proprionate de méthyle ($CH_3CHCO_2Me$)SCSOEt et 0,19 g d'acide méthacrylique est incorporé. La température est ultérieurement portée à 85°C et 2,28 g de persulfate d'ammonium $(NH_4)_2S_2O_8$ ont été ajoutés. Au bout de cinq minutes, l'addition est poursuivie par 40,5 g de styrène, 1,69 g d'acide méthacrylique pendant une heure. Une fois l'addition achevée, on obtient une émulsion de copolymère (latex) maintenue à 85°C pendant une heure.

<u>Etape 2 : Synthèse d'un bloc statistique (EtA/MMA) d'acrylate d'éthyle (EtA) et d'acide méthacrylique (MMA) avec un rapport en poids : EtA/MAA=95/5 pour obtenir un copolymère dibloc.</u>

113,51 g de l'émulsion de copolymère obtenue précédemment sont retirés du réacteur. 0,17 g de persulfate d'ammonium $(NH_4)_2S_2O_8$ et 7,0 g d'eau sont ajoutés à l'émulsion restant dans le réacteur à 85°C. Au bout de cinq minutes, on a commencé l'addition d'un mélange suivant comprenant :

- 424,41 g d'acrylate d'éthyle (EtA) et
- 22,34 g d'acide méthacrylique (MAA)
  et simultanément d'un autre mélange comprenant :

- 385 g d'eau et
- 1,06 g de $Na_2CO_3$.

L'addition dure 1 heure. Le système est maintenu à cette température pendant trois heures supplémentaires.

Le poids moléculaire calculé du bloc de (St/MMA) est de 5000 g/mol et le poids moléculaire calculé du bloc de (EtA/MMA) est de 62 500 g/mol.

<u>Exemple 4 (comparatif) : tribloc de poly(styrène/acide méthacrylique)-bloc-poly(acrylate d'éthyle/acide méthacrylique)-bloc-poly(styrène/acide méthacrylique) (St/MMA)-b-(EtA/MMA)-b-(St/MMA) où St/MMA = 80/20 dans le premier bloc, St/MMA = 95/5 dans le troisième bloc et EtA/MMA = 95/5</u>

<u>Etape 1 : Synthèse d'un bloc statistique (St/MMA) de styrène (St) et d'acide méthacrylique (MAA) avec un rapport en poids de St/MAA=96/4.</u>

On réalise une polymérisation dans des conditions d'émulsion dans un réacteur chemisé équipé d'un agitateur

en acier inoxydable à trois lames. 450 g d'eau, 9,32 g de sulfate de dodécyle sodique (Aldrich) et 0,38 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 4,50 g de styrène, 1,95 g de α-(o-éthylxanthyl)proprionate de méthyle $(CH_3CHCO_2Me)SCSOEt$ et 0,19 g d'acide méthacrylique est incorporé. La température est ultérieurement portée à 85°C et 2,28 g de persulfate d'ammonium $(NH_4)_2S_2O_8$ ont été ajoutés. Au bout de cinq minutes, l'addition est poursuivie par 40,5 g de styrène, 1,69 g d'acide méthacrylique pendant une heure. Une fois l'addition achevée, on obtient une émulsion de copolymère (latex) maintenue à 85°C pendant une heure.

Etape 2 : Synthèse d'un bloc statistique (EtA/MMA) d'acrylate d'éthyle (EtA) et d'acide méthacrylique (MMA) avec un rapport en poids : EtA/MAA=95/5 pour obtenir un copolymère dibloc.

113,51 g de l'émulsion de copolymère obtenue précédemment sont retirés du réacteur. 0,17 g de persulfate d'ammonium $(NH_4)_2S_2O_8$ et 7,0 g d'eau sont ajoutés à l'émulsion restant dans le réacteur à 85°C. Au bout de cinq minutes, on a commencé l'addition d'un mélange suivant comprenant :

- 424,41 g d'acrylate d'éthyle (EtA) et
- 22,34 g d'acide méthacrylique (MAA)
  et simultanément d'un autre mélange comprenant :

- 385 g d'eau et
- 1,24 g de $Na_2CO_3$.

L'addition dure 1 heure. Le système est maintenu à cette température pendant trois heures supplémentaires. On obtient une émulsion de copolymère (latex).

Etape 3 : Synthèse d'un troisième bloc statistique (St/MMA) de styrène (St) et d'acide méthacrylique (MMA) avec un rapport en poids : St/MAA=95/5 pour obtenir un copolymère tribloc.

353,55 g de l'émulsion de copolymère obtenue précédemment sont retirés du réacteur. 0,07 g de persulfate d'ammonium $(NH_4)_2S_2O_8$ et 5,0 g d'eau sont ajoutés à l'émulsion restant dans le réacteur à 85°C. Au bout de cinq minutes, on a commencé l'addition d'un mélange suivant comprenant :

- 24,25 g de styrène (St) et
- 1,28 g d'acide méthacrylique (MAA)
  et simultanément d'un autre mélange comprenant :

- 32,5 g d'eau et
- 0,07 g de $Na_2CO_3$.

L'addition dure 1 heure. Le système est maintenu à cette température pendant trois heures supplémentaires.
Le poids moléculaire calculé du premier bloc de (St/MMA) est de 5000 g/mol, le poids moléculaire calculé du deuxième bloc de (EtA/MMA) est de 62 500 g/mol et le poids moléculaire calculé du troisième bloc de (St/MMA) est de 500 g/mol.

Exemple 5: tribloc de poly(styrène/acide méthacrylique)-bloc-poly(acrylate d'éthyle/acide méthacrylique)-bloc-poly(styrène/acide méthacrylique) (St/MMA)-b-(EtA/MMA)-b-(St/MMA) où St/MMA = 80/20 dans le premier bloc, St/MMA = 98/2 dans le troisième bloc et EtA/MMA = 95/5

Etape 1 : Synthèse d'un premier bloc statistique (St/MMA) de styrène (St) et d'acide méthacrylique (MAA) avec un rapport en poids de St/MAA=80/20.

On réalise une polymérisation dans des conditions d'émulsion dans un réacteur chemisé équipé d'un agitateur en acier inoxydable à trois lames. 555 g d'eau, 12,05 g de sulfate de dodécyle sodique (Aldrich) et 1,50 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 3,00 g de styrène, 2,60 g de α-(o-éthylxanthyl)proprionate de méthyle $(CH_3CHCO_2Me)SCSOEt$ et 0,75 g d'acide méthacrylique est incorporé. La température est ultérieurement portée à 85°C et 0,52 g de persulfate d'ammonium

$(NH_4)_2S_2O_8$ a été ajouté. Au bout de cinq minutes, l'addition est poursuivie par 27,0 g de styrène, 6,75 g d'acide méthacrylique pendant une heure. Une fois l'addition achevée, on obtient une émulsion de copolymère (latex) maintenue à 85°C pendant une heure.

Etape 2: Synthèse d'un deuxième bloc aléatoire (EtA/MMA) d'acrylate d'éthyle (EtA) et d'acide méthacrylique (MMA) avec un rapport en poids : EtA/MAA=95/5 pour obtenir un copolymère dibloc.

101,53 g de l'émulsion de copolymère obtenue précédemment sont retirés du réacteur. 0,22 g de persulfate d'ammonium $(NH_4)_2S_2O_8$ et 5,0 g d'eau sont ajoutés à l'émulsion restant dans le réacteur à 85°C. Au bout de cinq minutes, on a commencé l'addition d'un mélange suivant comprenant :

- 606,3 g d'acrylate d'éthyle (EtA) et
- 31,91 g d'acide méthacrylique (MAA)
  et simultanément d'un autre mélange comprenant :

- 512,5 g d'eau et
- 1,77 g de $Na_2CO_3$.

L'addition dure 1 heure. Le système est maintenu à cette température pendant trois heures supplémentaires. On obtient une émulsion de copolymère (latex).

Etape 3 : Synthèse d'un troisième bloc statistique (St/MMA) de styrène (St) et d'acide méthacrylique (MMA) avec un rapport en poids: St/MAA=98/2 pour obtenir un copolymère tribloc.

333,07 g de l'émulsion de copolymère obtenue précédemment sont retirés du réacteur. 0,09 g de persulfate d'ammonium $(NH_4)_2S_2O_8$ et 4,0 g d'eau sont ajoutés à l'émulsion restant dans le réacteur à 85°C. Au bout de cinq minutes, on a commencé l'addition d'un mélange suivant comprenant :

- 4,0 g de styrène (St) et
- 0,08 g d'acide méthacrylique (MAA)
  et simultanément d'un autre mélange comprenant :

- 40,0 g d'eau et
- 0,005 g de $Na_2CO_3$.

L'addition dure 1 heure. Le système est maintenu à cette température pendant trois heures supplémentaires.
Le poids moléculaire calculé du premier bloc de (St/MMA) est de 3000 g/mol, le poids moléculaire calculé du deuxième bloc de (EtA/MMA) est de 62 500 g/mol et le poids moléculaire calculé du troisième bloc de (St/MMA) est de 500 g/mol.

Exemple 6 (comparatif) : tribloc de poly(styrène/acide méthacrylique)-bloc-poly(acrylate d'éthyle/acide méthacrylique)-bloc-poly(styrène/acide méthacrylique) (St/MMA)-b-(EtA/MMA)-b-(St/MMA) où St/MMA = 98/2 dans le premier bloc, St/MMA = 98/2 dans le troisième bloc et EtA/MMA = 95/5

Etape 1 : Synthèse d'un premier bloc statistique (St/MMA) de styrène (St) et d'acide méthacrylique (MAA) avec un rapport en poids de St/MAA=98/2.

On réalise une polymérisation dans des conditions d'émulsion dans un réacteur chemisé équipé d'un agitateur en acier inoxydable à trois lames. 660 g d'eau, 7,54 g de sulfate de dodécyle sodique (Aldrich) et 0,31 g de carbonate de sodium $Na_2CO_3$ sont introduits à température ambiante sous forme de mélange de départ. Le mélange obtenu est agité pendant 30 minutes (190 tours/min) pendant ce temps, la température est portée à 75°C. Ensuite, un mélange comprenant 6,82 g de styrène, 4,65 g de $\alpha$-(o-éthylxanthyl)proprionate de méthyle $(CH_3CHCO_2Me)SCSOEt$ et 0,17 g d'acide méthacrylique est incorporé. La température est ultérieurement portée à 85°C et 1,39 g de persulfate d'ammonium $(NH_4)_2S_2O_8$ a été ajouté. Au bout de cinq minutes, l'addition est poursuivie par 58,8 g de styrène, 1,57 g d'acide méthacrylique pendant une heure. Une fois l'addition achevée, on obtient une émulsion de copolymère (latex) maintenue à 85°C pendant une heure.

Etape 2: Synthèse d'un deuxième bloc statistique (EtA/MMA) d'acrylate d'éthyle (EtA) et d'acide méthacrylique (MMA) avec un rapport en poids: EttA/MAA=95/5 pour obtenir un copolymère dibloc.

67,66 g de l'émulsion de copolymère obtenue précédemment sont retirés du réacteur. 0,46 g de persulfate d'ammonium $(NH_4)_2S_2O_8$ et 12 g d'eau sont ajoutés à l'émulsion restant dans le réacteur à 85°C. Au bout de cinq minutes, on a commencé l'addition d'un mélange suivant comprenant :

- 387,96 g d'acrylate d'éthyle (EtA) et
- 7,91 g d'acide méthacrylique (MAA)
  et simultanément d'un autre mélange comprenant :

- 96 g d'eau et
- 0,44 g de $Na_2CO_3$.

L'addition dure 1 heure. Le système est maintenu à cette température pendant trois heures supplémentaires. On obtient une émulsion de copolymère (latex).

Etape 3: Synthèse d'un troisième bloc statistique (St/MMA) de styrène (St) et d'acide méthacrylique (MMA) avec un rapport en poids: St/MAA=98/2 pour obtenir un copolymère tribloc.

392,67 g de l'émulsion de copolymère obtenue précédemment sont retirés du réacteur. 0,05 g de Na2CO3 dans 5 g d'eau est ajouté à l'émulsion restant dans le réacteur. 0,29 g de persulfate d'ammonium $(NH_4)_2S_2O_8$ et 10,0 g d'eau y sont ajoutés à 85°C. Au bout de cinq minutes, on a commencé l'addition d'un mélange suivant comprenant :

- 7,33 g de styrène (St) et
- 0,15 g d'acide méthacrylique (MAA).

L'addition dure 1 heure. Le système est maintenu à cette température pendant trois heures supplémentaires.
Le poids moléculaire calculé du premier bloc de (St/MMA) est de 3000 g/mol, le poids moléculaire calculé du deuxième bloc de (EtA/MMA) est de 19 500 g/mol et le poids moléculaire calculé du troisième bloc de (St/MMA) est de 500 g/mol.
Certaines caractéristiques des copolymères blocs des exemples sont reportées dans le tableau 1.

Tableau 1

| Exemple | Bloc A | Bloc B | Bloc C |
|---|---|---|---|
| 1 | St/MMA : 80/20<br>5000 g/mol | EtA/MMA : 95/5<br>62 500 g/mol | / |
| 2 | St/MMA: 80/20<br>5000 g/mol | EtA/MMA: 95/5<br>62 500 g/mol | St/MMA: 98/2<br>500 g/mol |
| 3 (comparatif) | St/MMA : 96/4<br>5000 g/mol | EtA/MMA : 95/5<br>62 500 g/mol | / |
| 4 (comparatif) | St/MMA : 96/4<br>5000 g/mol | EtA/MMA : 95/5<br>62 500 g/mol | St/MMA : 95/5<br>500 g/mol |
| 5 | St/MMA: 80/20<br>5000 g/mol | EtA/MMA : 95/5<br>62 500 g/mol | St/MMA : 98/2<br>500 g/mol |
| 6 (comparatif) | St/MMA : 96/4<br>3000 g/mol | EtA/MMA : 95/5<br>62 500 g/mol | St/MMA : 98/2<br>500 g/mol |

Exemple 7 : Essais d'étirement/de contrainte

Les films des copolymères blocs des exemples précédents sont coulés et séchés dans une matrice en silicium à température ambiante pendant deux jours, ensuite durcis au four à 50°C pendant 24 heures et enfin à 75°C pendant 2 heures. Le film obtenu est d'environ 1 mm d'épaisseur. Les bandes de 4 cm de long et de 2 cm de large sont coupées

pour former des films afin de réaliser les essais mécaniques.

On réalise une expérience d'étirement/de contrainte avec un INSTRON 5543. Un taux de contrainte constant est appliqué avec une vitesse d'allongement fixée de 2 mm/s. L'étirement est mesuré sur l'allongement (courbe étirement/contrainte). L'allongement maximum possible avec cet appareil est de 3000%.

Les différents comportements suivants sont reportés :

Comportement élastique : hausse constante de l'étirement puis soudaine rupture à un étirement critique. L'étirement (en mégapascals : MPa) et l'allongement (en%) à la rupture sont reportés.

Comportement plastique : aucune rupture en deçà de 3 000% de déformation, une contrainte maximum observée à une valeur d'étirement faible dans la courbe étirement/contrainte, puis un comportement d'écoulement avec une contrainte en diminution avec une hausse de la déformation. Il n'y a aucune rupture, l'échantillon s'écoule. Seul le maximum de la courbe étirement/contrainte en (mégapascals : MPa) est reporté.

Les résultats figurent dans le tableau 2.

Tableau 2

| Polymère de l'exemple : | comportement | Etirement (MPa) | Allongement (%) à la rupture |
|---|---|---|---|
| 1 | élastique | 3,05 (rupture) | 1000 |
| 2 | élastique | 2,75 (rupture) | 1150 |
| 3 (comparatif) | plastique | 0,9 (maximum) | Non applicable |
| 4 (comparatif) | plastique | 1,0 (maximum) | Non applicable |
| 5 | élastique | 1,4 | 1600 |
| 6 (comparatif) | plastique | 0,2 (maximum) | Non applicable |

Exemple 8 : Essais d'analyse mécanique dynamique (DMA)

On a réalisé des analyses mécaniques dynamiques sur les films de copolymère bloc. La transition vitreuse du bloc souple, le module d'élasticité du plateau élastique et la fusion du bloc rigide (Tg élevée) ont été mesurés. Les modules complexes (en Pa) des polymères blocs sont mesurés à différentes températures (la température augmente) à une fréquence constante de 1 Hz. L'appareil utilisé est un Universal V3. 1B TA Instruments, utilisant une méthode de hausse des températures/fréquence unique. La géométrie est soit cisaillée soit extensionnelle. Une première diminution du module complexe à mesure que la température augmente, typiquement de $10^9$ Pa à $10^6$ Pa, est considérée comme correspondant à la Tg du bloc souple. Puis, le module est constant quand la température augmente (plateau élastique). Le module constant est reporté comme étant le module du plateau élastique. Ensuite, il diminue fortement à nouveau quand il atteint la température considérée comme correspondant à la Tg élevée du polymère. Cette température plus élevée est considérée comme correspondant à la fusion du polymère (propriété thermoplastique). Les résultats figurent dans le tableau 3.

Tableau 3

| Polymère de l'exemple | Module du plateau élastique (Pa) | Température de fusion (°C) |
|---|---|---|
| 1 | $10^6$ | 45 |
| 2 | $10^6$ | 45 |
| 3 (comparatif) | $10^6$ | 30 |
| 4 (comparatif) | $10^6$ | 30 |
| 5 | $10^6$ | 45 |
| 6 (comparatif) | Aucun plateau élastique observé | 10 |

Les polymères des exemples comparatifs 3, 4 et 6 ne présentent pas de comportement élastomère. La cohésion du polymère est faible. Les polymères s'écoulent. Ils présentent un comportement thermoplastique médiocre. Les polymères des exemples 1, 2 et 5 présentent un fort comportement élastomère et un comportement thermoplastique. Les

propriétés élastomères sont bonnes mêmes si le poids moléculaire du bloc rigide est faible (5000 g/mol pour les polymères selon les exemples 1 et 2) et même très faible (3000 g/mol pour les polymères selon l'exemple 5).

## Revendications

1. Copolymère séquencé, qui est un copolymère dibloc (bloc A)-(bloc B), un copolymère tribloc (bloc A)-(bloc B)-(bloc A) ou tribloc (bloc A)-(bloc B)-(bloc C),

   - le bloc A étant un bloc rigide, comprenant au moins 55% de motifs récurrents dérivés d'un monomère rigide choisi parmi le groupe constitué du styrène, de l'acrylate d'isobornyle et du méthacrylate d'isoboroyle,
   - le bloc B étant un bloc souple comprenant au moins 55% de motifs récurrents dérivés d'un monomère souple choisi parmi le groupe constitué des esters d'acide acrylique, esters d'acide méthacrylique et des mélanges de ces esters,
   - le bloc C étant un bloc rigide, comprenant des motifs récurrents dérivés d'un monomère rigide choisi parmi le groupe constitué du styrène, de l'acrylate d'isobornyle et du méthacrylate d'isobornyle,

   dans lequel :

   - le bloc A comprend plus de 10% en poids de motifs dérivés d'un monomère de ségrégation du bloc A choisi parmi le groupe constitué de l'acide acrylique, l'acide méthacrylique, l'acrylonitrile, du méthacrylonitrile, de la 2-vinylpyridine et 4-vinylpyridine ou
   - le bloc B comprend au moins 6% en poids de motifs dérivés d'un monomère de ségrégation du bloc B choisi parmi le groupe constitué de l'acide acrylique, l'acide méthacrylique, l'acrylonitrile, du méthacrylonitrile et des vinylpyrrolidones et
   - le copolymère bloc possède un poids moléculaire de plus de 10 000 g/mol.

2. Copolymère séquencé selon la revendication 1, dans lequel

   - le bloc B comprend au moins 10% en poids de motifs dérivés des monomères de ségrégation du bloc B.

3. Copolymère séquencé selon la revendication 1, dans lequel le poids moléculaire du copolymère bloc est supérieur à 25 000 g/mol.

4. Copolymère séquencé selon la revendication 1, dans lequel le poids moléculaire du copolymère bloc est supérieur à 50 000 g/mol.

5. Copolymère séquencé selon la revendication 1, dans lequel le poids moléculaire du copolymère bloc est inférieur ou égal à 100 000 g/mol.

6. Copolymère séquencé selon la revendication 1, dans lequel le bloc A possède un poids moléculaire compris entre 3 000 et 15 000 g/mol.

7. Copolymère séquencé selon la revendication 3, dans lequel le bloc B possède un poids moléculaire compris entre 20 000 et 80 000 g/mol.

8. Copolymère séquencé selon la revendication 1, ayant un rapport entre le poids moléculaire du bloc A pondéré moyen et le poids moléculaire du bloc B pondéré moyen compris entre 0,045 et 0,5.

9. Copolymère séquencé selon la revendication 1, dans lequel :

   - le bloc A comprend de 75% à 90% en poids de motifs dérivés du styrène et de 10% à 25% en poids de motifs dérivés de l'acide acrylique ou de l'acide méthacrylique et
   - le bloc B comprend au moins 75% en poids de motifs dérivés de l'acrylate d'éthyle, de l'acrylate de butyle ou mélanges de ceux-ci.

10. Copolymère séquencé selon la revendication 9, qui est un copolymère dibloc (bloc A)-(bloc B) où le bloc A comprend des motifs dérivés du styrène et des motifs dérivés de l'acide méthacrylique et le bloc B comprend des motifs dérivés

de l'acrylate d'éthyle.

**11.** Copolymère séquencé selon la revendication 1, qui est un copolymère tribloc (bloc A)-(bloc B)-(bloc A) où le bloc A comprend des motifs dérivés du styrène et des motifs dérivés de l'acide méthacrylique et le bloc B comprend des motifs dérivés de l'acrylate d'éthyle.

**12.** Copolymère séquencé selon la revendication 1, qui est un copolymère tribloc (bloc A)-(bloc B)-(bloc A) où le bloc A comprend des motifs dérivés du styrène et des motifs dérivés de l'acide méthacrylique et le bloc B comprend des motifs dérivés de l'acrylate de butyle.

**13.** Copolymère séquencé selon la revendication 1, qui est un copolymère tribloc (bloc A)-(bloc B)-(bloc A) où le bloc A comprend des motifs dérivés du styrène et des motifs dérivés de l'acide méthacrylique et le bloc B comprend des motifs dérivés de l'acrylate de 2-éthylhexyle.

**14.** Copolymère séquencé selon la revendication 1, qui est un copolymère tribloc (bloc A)-(bloc B)-(bloc C) où le bloc A comprend des motifs dérivés du styrène et des motifs dérivés de l'acide méthacrylique, le bloc B comprend des motifs dérivés de l'acrylate de 2-éthylhexyle, de l'acrylate de butyle ou de l'acrylate d'éthyle et le bloc C comprend des motifs dérivés du styrène.

**15.** Copolymère séquencé selon la revendication 1, dans lequel le bloc souple, sous une forme solide ou séchée, forme une phase souple continue et le ou les blocs rigides forment une phase rigide, la phase rigide étant dispersée dans la phase souple.

**16.** Copolymère séquencé selon la revendication 15, qui est un polymère thermoplastique sous une forme solide ou séchée.

**17.** Copolymère séquencé selon la revendication 1, ayant, sous une forme solide ou séchée, un allongement à la rupture d'au moins 500% et une résistance à la traction d'au moins 1,5 MPa.

**18.** Copolymère séquencé selon la revendication 1, obtenu par un procédé de polymérisation de radicaux libres vivante séquencée.

**19.** Copolymère séquencé selon la revendication 17, dans lequel le procédé de polymérisation implique l'utilisation d'un agent de transfert comprenant un groupe de formules -S-C(S)-Y-, -S-C(S)-S- ou -S-P(S)-Y ou -S-P(S)-S- dans lesquelles Y est un atome différent du soufre.

**20.** Copolymère séquencé selon la revendication 1, qui est dispersé dans un milieu aqueux sous une forme latex.

**21.** Composition adhésive comprenant un copolymère séquencé selon la revendication 1.

**22.** Composition adhésive selon la revendication 21, dans laquelle le bloc B comprend des motifs récurrents dérivés de l'acrylate de butyle.

**23.** Produit adhésif comprenant une couche de base et une couche adhésive déposée sur la couche de base, dans lequel la couche adhésive comprend le copolymère séquencé selon la revendication 1.

**24.** Produit adhésif selon la revendication 23, dans lequel l'enduction est réalisée par application sur la couche de base d'une composition comprenant le copolymère séquencé sous forme fondue.

## Claims

**1.** A block copolymer, being a diblock (block A)-(bloc B) copolymer, a triblock (block A)-(block B)-(block A), or a triblock (block A)-(block B)-(block C) copolymer,

- block A being a stiff block, comprising at least 55% of repetitive units deriving from a stiff monomer selected from the group consisting of styrene, isobornyl acrylate, and isobornylmethacrylate,
- block B being a soft block, comprising at least 55% of repetitive units deriving from a soft monomer selected

from the group consisting of esters of acrylic acid, esters of methacrylic acid, and mixtures thereof,
- block C being a stiff block, comprising repetitive units deriving from a stiff monomer selected from the group consisting of styrene, isobornyl acrylate, and isobornylmethacrylate,

wherein:

- block A comprises more than 10% by weight of units deriving from a block A segregation monomer selected from the group consisting of acrylic acid, methacrylic acid, acrylonitrile, methacrylonitrile, 2-vinylpyridine, and 4-vinylpyrridine, or
- block B comprises at least 6 % by weight of units deriving from a block B segregation monomer selected from the group consisting of acrylic acid, methacrylic acid, acrylonitrile, methacrylonitrile, and vinylpyrrolidones, and
- the block copolymer has a molecular weight of more than 10,000 g/mol.

**2.** A block copolymer according to claim 1, wherein

- block B comprises at least 10 % by weight of units deriving from the block B segregation monomers.

**3.** A block copolymer according to claim 1, wherein the molecular weight of the block copolymer is of more than 25,000 g/mol.

**4.** A block copolymer according to claim 1, wherein the molecular weight of the block copolymer is of more than 50,000 g/mol.

**5.** A block copolymer according to claim 1, wherein the molecular weight of the block copolymer is of less than or equal to 100000 g/mol.

**6.** A block copolymer according to claim 1, wherein block A has a molecular weight comprised between 3000 and 15000 g/mol.

**7.** A block copolymer according to claim 3, wherein block B has a molecular weight comprised between 20000 and 80000 g/mol.

**8.** A block copolymer according to claim 1, having ratio between the weight-average molecular weight of block A, and the weight-average molecular weight of block B of between 0.045 and 0.5.

**9.** A block copolymer according to claim 1, wherein:

- block A comprises from 75% to 90% by weight of units deriving form styrene, and from 10% to 25% by weight of units deriving form acrylic acid or methacrylic acid, and
- block B comprises at least 75% by weight of units deriving from ethyl acrylate, butyl acrylate, or mixtures thereof.

**10.** A block copolymer according to claim 9, being a diblock (block A)-(block B) copolymer wherein block A comprises units deriving from styrene and units deriving from methacrylic acid, and block B comprises units deriving from ethyl acrylate.

**11.** A block copolymer according to claim 1, being a triblock (block A)-(block B)-(block A) copolymer wherein block A comprises units deriving from styrene and units deriving from methacrylic acid, and block B comprises units deriving from ethyl acrylate.

**12.** A block copolymer according to claim 1, being a triblock (block A)-(block B)-(block A) copolymer wherein block A comprises units deriving from styrene and units deriving from methacrylic acid, and block B comprises units deriving from butyl acrylate.

**13.** A block copolymer according to claim 1, being a triblock (block A)-(block B)-(block A) copolymer wherein block A comprises units deriving from styrene and units deriving from methacrylic acid, and block B comprises units deriving from 2-ethylhexyl acrylate.

**14.** A block copolymer according to claim 1, being a triblock (block A)-(block B)-(block C) copolymer wherein block A

comprises units deriving from styrene and units deriving from methacrylic acid, block B comprises units deriving from butyl acrylate, ethyl acrylate or mixtures thereof, and block C comprises units deriving from styrene.

**15.** A block copolymer according to claim 1, wherein, in a solid or dried form, the soft block forms a continuous soft phase, and the stiff block(s) forms a stiff phase, the stiff phase being dispersed in the soft phase.

**16.** A block copolymer according to claim 15, being a thermoplastic polymer in a solid or dried form.

**17.** A block copolymer according to claim 1, having in a solid or dried form, having an elongation at break of at least 500% and tensile strength of at least 1.5 MPa.

**18.** A block copolymer according to claim 1, obtained by a sequenced living free-radical polymerization process.

**19.** A block copolymer according to claim 17, wherein the polymerization process involves using as transfer agent comprising a group of formula -S-C(S)-Y-, -S-C(S)-S-, or -S-P(S)-Y-, or -S-P(S)-S-, wherein Y is an atom different from sulfur.

**20.** A block copolymer according to claim 1, being dispersed in an aqueous medium in a latex form.

**21.** An adhesive composition comprising the block copolymer according to claim 1.

**22.** An adhesive composition according to claim 21, wherein block B comprises repetitive units deriving from butyl acrylate.

**23.** An adhesive product comprising a base layer and an adhesive layer coated onto the base layer, wherein the adhesive layer comprises the block copolymer according to claim 1.

**24.** An adhesive product according to claim 23, wherein coating is carried out by applying onto the base layer a composition comprising the block copolymer in a melted form.

**Patentansprüche**

**1.** Blockcopolymer, das ein Diblockcopolymer (Block A)-(Block B), ein Triblockcopolymer (Block A)-(Block B)-(Block A) oder ein Triblockcopolymer (Block A)-(Block B)-(Block C) ist, wobei

- der Block A ein starrer Block ist, welcher wenigstens 55% sich wiederholende Einheiten umfasst, die von einem aus der Gruppe bestehend aus Styrol, Isobornylacrylat und Isobornylmethacrylat ausgewählten starren Monomer abgeleitet sind,
- der Block B ein weicher Block ist, welcher wenigstens 55% sich wiederholende Einheiten umfasst, die von einem aus der Gruppe bestehend aus Acrylsäureestern, Methacrylsäureestern und Mischungen dieser Ester ausgewählten weichen Monomer abgeleitet sind,
- der Block C ein starrer Block ist, welcher sich wiederholende Einheiten umfasst, die von einem aus der Gruppe bestehend aus Styrol, Isobornylacrylat und Isobornylmethacrylat ausgewählten starren Monomer abgeleitet sind,

worin:

- der Block A mehr als 10 Gew.-% Einheiten umfasst, die von einem aus der Gruppe bestehend aus Acrylsäure, Methacrylsäure, Acrylnitrll, Methacrylnitril, 2-Vinylpyridin und 4-Vinylpyridin ausgewählten Block A-Segregationsmonomer abgeleitet sind, oder
- der Block B wenigstens 6 Gew.-% Einheiten umfasst, die von einem aus der Gruppe bestehend aus Acrylsäure, Methacrylsäure, Acrylnitril, Methacrylnitril und Vinylpyrrolidonen ausgewählten Block B-Segregationsmonomer abgeleitet sind, und
- das Blockcopolymer ein Molekulargewicht von mehr als 10000 g/mol aufweist.

**2.** Blockcopolymer gemäß Anspruch 1, worin der Block B wenigstens 10 Gew.-% Einheiten umfasst, die von Block B-Segregationsmonomeren abgeleitet sind.

3. Blockcopolymer gemäß Anspruch 1, worin das Molekulargewicht des Blockcopolymers mehr als 25000 g/mol beträgt.

4. Blockcopolymer gemäß Anspruch 1, worin das Molekulargewicht des Blockcopolymers mehr als 50000 g/mol beträgt.

5. Blockcopolymer gemäß Anspruch 1, worin das Molekulargewicht des Blockcopolymers kleiner oder gleich 100000 g/mol ist.

6. Blockcopolymer gemäß Anspruch 1, worin der Block A ein Molekulargewicht zwischen 3000 und 15000 g/mol aufweist.

7. Blockcopolymer gemäß Anspruch 3, worin der Block B ein Molekulargewicht zwischen 20000 und 80000 g/mol aufweist.

8. Blockcopolymer gemäß Anspruch 1, wobei das Verhältnis zwischen dem gewichtsmittleren Molekulargewicht des Blocks A und dem gewichtsmittleren Molekulargewicht des Blocks B zwischen 0,045 und 0,5 liegt.

9. Blockcopolymer gemäß Anspruch 1, worin

- der Block A 75 bis 90 Gew.% von Styrol abgeleitete Einheiten und 10 bis 25 Gew.-% von Acrylsäure oder Methacrylsäure abgeleite Einheiten umfasst, und
- der Block B wenigstens 75 Gew.-% von Ethylacrylat, Butylacrylat oder Mischungen davon abgeleitete Einheiten umfasst.

10. Blockcopolymer gemäß Anspruch 9, das ein Diblockcopolymer (Block A)-(Block B) ist, wobei der Block A von Styrol abgeleitete Einheiten und von Methacrylsäure abgeleitete Einheiten umfasst, und der Block B von Ethylacrylat abgeleitete Einheiten umfasst.

11. Blockcopolymer gemäß Anspruch 1, das ein Triblockcopolymer (Block A)-(Block B)-(Block A) ist, wobei der Block A von Styrol abgeleitete Einheiten und von Methacrylsäure abgeleitete Einheiten umfasst, und der Block B von Ethylacrylat abgeleitete Einheiten umfasst.

12. Blockcopolymer gemäß Anspruch 1, das ein Triblockcopolymer (Block A)-(Block B)-(Block A) ist, wobei der Block A von Styrol abgeleitete Einheiten und von Methacrylsäure abgeleitete Einheiten umfasst, und der Block B von Butylacrylat abgeleitete Einheiten umfasst.

13. Blockcopolymer gemäß Anspruch 1, das ein Triblockcopolymer (Block A)-(Block B)-(Block A) ist, wobei der Block A von Styrol abgeleitete Einheiten und von Methacrylsäure abgeleitete Einheiten umfasst, und der Block B von 2-Ethylhexylacrylat abgeleitete Einheiten umfasst.

14. Blockcopolymer gemäß Anspruch 1, das ein Triblocktopolymer (Block A)-(Block B)-(Block C) ist, wobei der Block A von Styrol abgeleitete Einheiten und von Methacrylsäure abgelelteie Einheiten umfasst, und der Block B von 2-Ethylhexylacrylat, Butylacrylat oder Ethylacrylat abgeleitete Einheiten umfasst, und der Block C von Styrol abgeleitete Einheiten umfasst.

15. Blockcopolymer gemäß Anspruch 1, worin der weiche Block, in fester oder getrockneter Form, eine kontinuierliche weiche Phase bildet, und der oder die starren Blöcke eine starre Phase bilden, wobei die starre Phase in der weichen Phase dispergiert ist.

16. Blockcopolymer gemäß Anspruch 15, das ein thermoplastisches Polymer in fester oder getrockneter Form ist.

17. Blockcopolymer gemäß Anspruch 1, das In fester oder getrockneter Form eine Bruchdehnung von wenigstens 500% und eine Zugfestigkeit von wenigstens 1,5 MPa aufweist.

18. Blockcopolymer gemäß Anspruch 1, das durch das Verfahren der lebenden radikalischen Blockpolymerisation erhalten wird.

19. Blockcopolymer gemäß Anspruch 17, worin das Polymerisationsverfahren die Verwendung eines Übertragungsmittels einschließt, das eine Gruppe der Formeln -S-C(S)-Y-, -S-C(S)-S-, -S-P(S)-Y- oder -S-P(S)-S- umfasst, in

denen Y ein anderes Atom als Schwefel ist.

**20.** Blockcopolymer gemäß Anspruch 1, das in einer Latex-Form in einem wässrigen Medium dispergiert ist.

**21.** Klebezusammensetzung, umfassend ein Blockcopolymer gemäß Anspruch 1.

**22.** Klebezusammensetzung gemäß Anspruch 21, wobei der Block B sich wiederholende Einheiten aufweist, die von Butylacrylat abgeleitet sind.

**23.** Klebeprodukt, umfassend eine Grundschicht und eine auf der Grundschicht angeordnete Klebeschicht, wobei die Klebeschicht das Blockcopolymer gemäß Anspruch 1 umfasst.

**24.** Klebeprodukt gemäß Anspruch 23, wobei das Beschichten durch Aufbringen einer Zusammensetzung, die das Blockcopolymer in geschmolzener Form aufweist, auf die Grundschicht erfolgt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9858974 A
- US 6153705 A
- WO 9801478 A
- WO 9935178 A
- WO 9935177 A
- WO 9903894 A
- WO 9931144 A
- WO 0226836 A
- WO 0075207 A
- US 09980387 B
- WO 0210223 A
- WO 0222688 A
- WO 9630421 A


### Littérature non-brevet citée dans la description


- **FRANK S. BATES ; GLENN H. FREDRICKSON.** *Physics Today,* Février 1999, 32-38
- **OTU et al.** *Makromol. Chem. Rapid. Commun.,* 1982, vol. 3, 127
- **TATEMOTO et al.** Jap. Daikin Kogyo Co Ltd, 1975, vol. 50, 991
- **MATYJASZEWSKI et al.** *Macromolecules,* vol. 28, 2093
- **WEBSTER O.W.** *Group Transfer Polymerization,* 580-588
- Encyclopedia of Polymer Science and Engineering. Wiley Interscience, 1987, vol. 7
- **D. BRAUN et al.** *Macromol. Symp.,* 1996, vol. 111, 63
- **WAYLAND et al.** *J. Am. Chem. Soc.,* 1994, vol. 116, 7973